# EUROPEAN PATENT APPLICATION

(11) **EP 4 576 837 A1**
(43) Date of publication of application: **25.06.2025**
(21) Application number: 23218753.4
(22) Date of filing: 20.12.2023
(51) Int. Cl.: H04W 4/02, H04W 4/029, H04W 24/02, B25F 5/00, H04W 52/02, H04W 4/80, G06K 19/07

(54) **TAG, ASSET WITH TAGS, ASSET MANAGEMENT SYSTEM, AND METHOD FOR CONTROLLING THE SENDING OF ADVERTISING PACKETS OF TAGS**

(71) Applicant: Hilti Aktiengesellschaft, 9494 Schaan (LI)
(72) Inventor: Lupper, Alfred, 86482 Aystetten (DE); Zhao, Yueming, 86916 Kaufering (DE); Hochmuth, Georg, 87616 Marktoberdorf (DE)
(74) Representative: Hilti Aktiengesellschaft Corporate Intellectual Property

(57) **Abstract**

A method for controlling sending of advertising packets of tags comprises sending advertising packets at a default sending rate and/or a default sending power and/or a default packet size by a first tag; monitoring a movement of the first tag; receiving, by the first tag, settings for a sending power and/or a sending rate and/or packet size; adjusting the sending power and/or the sending rate and/or the packet size of the first tag according to the received settings for the sending power and/or the sending rate and/or the packet size; and adjusting the sending power and/or the sending rate and/or the packet size of the first tag to default settings if the movement of the first tag is detected.

## Description

### FIELD OF INVENTION

The present invention relates to a tag of an asset management system, to an asset with the tag, to an asset management system, to a method for controlling sending of advertising packets of tags, and to a computer program product to carry out the method.

### BACKGROUND OF THE INVENTION

Asset management solutions or systems comprise assets with tags that periodically send advertising packets, so-called beacons, via wireless communication. Devices, e.g., gateways or mobile phones, can receive these advertising packets. When an advertising packet from a tag is received, the receiving device knows that the tag, and therefore the tagged asset, is in its vicinity.

An example for an asset management system is described in "Hilti ON!Track Proaktives Tracking - Immer einen Schritt voraus", https://www.youtube.com/watch?v=b0y5elXzf1Y, retrieved November 15, 2023, Hilti Osterreich.

Gateways, as receiving devices, often scan permanently for advertising packets. Due to their limited battery capacity, mobile phones or vehicle gateways only scan on demand or less frequently. Tags have to send their advertising packets often enough to fulfil requirements on timeliness of the information of the asset management system. When a mobile phone is used as receiving device, tags should send their advertising packets often enough to be included in the scan of the mobile phone. E.g., a user may not want to wait for several minutes for a tag sending only every 5 minutes an advertising packet. However, sending frequently advertising packets is consuming energy, and can reduce the lifetime of a tag with a non-exchangeable battery.

A gateway, which has a lot of tags in its vicinity, needs frequent advertising packets to ensure receiving the advertising packets of all tags, as only one packet might be processed at the same time. If two packets of two tags collide, the time until the next packet is sent should not be too long. However, as discussed above, the frequent sending of packets is energy consuming.

It is one object of the present invention to provide an improved tag and method for controlling the sending of advertising packets of tags.

### DISCLOSURE OF THE INVENTION

A tag for an asset management system is comprising: a wireless communication sending unit, configured to send advertising packets with an adjustable sending power and/or an adjustable sending rate and/or an adjustable packet size; a wireless communication receiving unit, configured to receive settings for the sending power and/or the sending rate and/or the size of the advertising packets; a movement detection unit, configured to detect a movement of the tag; one or more first processors of the tag, configured to instruct sending the advertising packets with the received settings for the sending power and/or the sending rate and/or the packet size, if at least no movement of the tag is detected, and sending the advertising packets with default settings, if at least the movement is detected.

The movement detection unit allows the tag to identify situations, in which, e.g., frequent advertising packets should be sent and/or packets with high power and/or long packet length, despite being energy consuming. A tag, which is moved, has the risk to be moved away, e.g., from a gateway. To be identified by another gateway or to be connected as long as possible to the gateway, frequent advertising packets with high power are useful. If there is no movement of the tag, the sending power and/or the sending rate and/or the packet size of the tag may be adjusted adapted to the environment of the tag. Advertising packets, also called beacons, may be sent in different packet sizes, e.g., a Bluetooth beacon may comprise a non-variable header and a variable payload section, to reduce the packet size, and thus, e.g., reduce the energy necessary for transmission, the payload section may be reduced, and less data may be transferred.

There might be additional conditions for switching to received settings or to the default settings, e.g., a minimum time with or without the movement or the availability of new sensor or tool data on the tag, e.g., runtime, e.g. of a power tool the tag is attached to, temperature, and/or battery status or voltage. The switching to the default settings could also be triggered if the tag does not receive a reply from the gateway on the sending of an advertising packet, e.g. the gateway moved out of range, or the signal is attenuated by a barrier, in particular if a reply is not received within a predetermined time period.

Received settings may comprise sending power and/or sending rate values and/or packet size, determined, e.g., by the gateway or by the asset management system, e.g., on a backend. Received settings may comprise also data or information which is used by the tag to determine its sending power and/or sending rate or the content and thus the size of the advertising packets. The received setting for the sending power may comprise, e.g., the information to half the sending power and the tag then sends advertising packets with half the power according to the received settings. The received settings for the sending power may comprise, e.g., the signal strength of the advertising packets as received by the gateway and the tag may derive from its sending power and the received signal strength the sending power of for the advertising packets.

Default settings for the sending power and/or the sending rate and the size of the advertising packet may be derived from typical use scenarios, e.g., receiving the advertising packets by a mobile device; requirement for timeliness in an asset management system; typical distances in the asset management system from a receiving device to the tags. Default settings will typically be associated with frequent sending of complete, not reduced advertising packets with higher sending power, to ensure that a tag can be found by a receiving device and all data from the tag is received. In a default setting the tag may send an advertising packet every 5 to 10 seconds, with approximately -4 dBm and with 31 bytes of payload.

In an embodiment, the movement detection unit comprises an acceleration sensor, a vibration sensor, a GPS sensor, an orientation sensor, a gyro sensor, and/or a magnetometer. The kind of movement may be less relevant than the simple information that there is some kind of activity with the tag, i.e., that there is a risk, which justifies switching the tag to its default settings. Various known sensors can provide such information.

The tag may comprise one or more second sensors, e.g., sensors for temperature, runtime of a power tool, the tag is associated with, status of voltage of a battery of the tag. The tag may, e.g., switch to default values for sending power and/or sending rate and/or packet size, depending from the sensor reading of the one or more second sensors.

In an embodiment, the wireless communication sending unit comprises a radiofrequency sender, particularly a Bluetooth, Zigbee, Z-Wave, or LoRa sender. Also, the wireless communication receiving unit may comprise a radiofrequency receiver, particularly a Bluetooth, Zigbee, Z-Wave, or LoRa receiver. The communication sending unit and the communication receiving unit may also be implemented in a combined, or partially combined way, as sending and receiving unit.

In embodiments, the tag may further comprise a battery, particularly a coin cell, and/or a memory. Coin cells, also known as button cells or coin batteries, are a useful power source for the tag. The battery may be exchangeable or not exchangeable, the battery may also be rechargeable or non-rechargeable. In particular for batteries, which cannot be exchanged a low power consumption is desirable.

The tag may be used together with an asset, in particular a power tool or a power tool battery pack, more particular a saw, a driver, a wrench, a rotary hammer, a drill, or a screwdriver. Particularly, the tag is included in, attached to, particularly glued to, the asset.

On a construction site there may be hundreds of power tools, which may also be used at other construction sites. To have an overview which power tools are on which site, tags can be attached to the power tools. Tags can be glued to the power tools. Usually tags with not exchangeable batteries are used, to avoid servicing tags in the field, which might be burdensome, given the number of power tools on a construction site. If the lifetime of such a tag exceeds the typical service or exchange interval of the power tool, no field service due to the tag is necessary.

According to a further aspect, an asset management system is comprising a plurality of the tags as described and/or the described assets. The asset management system is further comprising a gateway, as a receiving device, configured to scan for advertising packets of the plurality of the tags and to send the settings for the sending power and/or the sending rate and/or the packet size to the plurality of the tags, in particular to send individual settings to a tag of the plurality of tags. One or more second processors of the asset management system are configured to determine the settings based on the number of tags seen by the gateway and the signal strength at which the advertising packets are received by the gateway, in particular the signal strength of the advertising packets of the tag of the plurality of tags.

Gateways may be used in an asset management system to communicate with the assets, e.g., detect which assets identified with their tag are in their vicinity, and to communicate with a backend of the asset management system, e.g., reporting which assets are in their vicinity. The backend can process data from one or more gateways and provide information to a user, e.g., provide the information on which construction site a specific power tool is. Gateways are often stationary to a site, at least over a certain time period of at least several weeks and are usually supplied with electricity from the grid. Therefore, a stationary gateway can continually scan for assets. When the distance of an asset to a gateway is increased, after a certain distance, depending on the sending power of the asset, the gateway will not be able to find the asset anymore. There might be also non-stationary gateways, such as van gateways, which are used on vehicles; such gateways may scan only periodically and not continuously, to save power.

It may be advantageous to increase the sending power of a tag, which is moved, to be as long as possible in the detection range of a gateway and also to be as easily detectable by another gateway, when the asset is moved in its detection range. While an asset is within the detection range of a gateway and is not moved, no change is to be expected and the sending rate of the tag of the asset, the sending power and/or the advertising packet size may be reduced. When the asset is moved, it might be advantageous to increase the sending rate, the number of advertising packets per time, of the tag of the asset, the sending power and/or the advertising packet size to full data, e.g., to be better and/or faster detectable by another gateway or by a mobile device and/or to receive the latest changed data from the tag.

In embodiments, the asset management system may further comprise a mobile device to scan for the advertising packets of the plurality of the tags. There may be, e.g., construction sites without a gateway or a power tool may be transported by a vehicle. In such situations the asset management system may receive information on assets not by a, often stationary, gateway, however, from a mobile device, such as a mobile phone, a tablet, or a laptop. The mobile device scans for advertising packets from tags and can communicate the tags to the backend of the asset management system.

According to a further aspect, a method for controlling the sending of advertising packets of tags is proposed, comprising: sending advertising packets at a default sending rate and/or a default sending power and/or a default packet size by a first tag; monitoring a movement of the first tag; receiving, by the first tag, settings for a sending power and/or a sending rate and/or a packet size; adjusting the sending power and/or the sending rate and/or the packet size of the first tag according to the received settings for the sending power and/or the sending rate and/or the packet size; and adjusting the sending power and/or the sending rate and/or the packet size of the first tag to default settings if the movement of the first tag is detected.

The method allows the setting for the sending rate and the sending power and the packet size of a tag to be adjusted, e.g., optimized, to its environment. As the movement of the tag is monitored, there is no risk, that the adjusted settings are detrimental in case of a movement of the tag, as in this case the default settings of the tag are chosen. The tag itself may monitor its movement. Therefore, there is no delay, e.g., for waiting for a new setting or waiting for a certain time period, where no new or confirmed settings are received by the tag. The tag may immediately after detecting a movement, switch to its default settings, which may allow a fast and easy detection by a receiving device, such as a gateway or a mobile phone.

In an embodiment, the tag may further monitor response of a gateway, activity of an asset the tag is attached to, a battery status or voltage of the tag, time, or time periods, and/or a temperature, and the tag may switch to its default settings in dependence of the further monitored parameters.

In an embodiment, the tag may distinguish between a movement on a vehicle and other movements. A movement on a vehicle might not trigger a switch to the default settings, while the tag is receiving replies to advertising packets from a gateway, e.g., a van gateway.

In an embodiment, the method is comprising: scanning for advertising packets of one or more tags, particularly by a gateway; deriving settings for the sending power and/or the sending rate and/or the packet size of the first tag based on the number of tags detected and/or a power of the advertising packets of the first tag received in the scanning; sending the settings for the sending power and/or the sending rate to the first tag. Further parameters, such as time, in particular time of the day and/or a timer, temperature, a runtime of a power tool the tag is attached to, and/or a movement and/or location of the gateway may be used for deriving the settings.

For an asset management system, it may be useful to adjust the received power of the advertising packets of the tags and/or the sending rate of the tags in its vicinity in dependence of the total number of tags from which advertising packets are received and/or in dependence of the received signal strength of the advertising packets received from a tag, optionally, also in dependence of the signal strength of other tags from which advertising packets are received.

In an embodiment, the derived settings for the sending power of the first tag changes, particularly reduces, the power of the advertising packets, received from the first tag. The sending power is changed from the default level to a power, derived from the received power of the detected tags, particularly, derived from an average of the power of the detected tags received in the scanning, or to a predefined power. Alternatively, the first tag may determine a channel loss from the received power of a packet sent by the gateway, with known sending power, to the first tag. The first tag may set the sending power of its advertising packets in dependence of the determined channel loss.

There may be, e.g., in the detection range of a gateway tags close to the gateway and tags far from the gateway. The received signal strength from a tag close to the gateway may be higher than the signal strength from a tag far from the gateway, particularly, if both tags send with the same default sending power. It may be useful to reduce the sending power of the tag close to the gateway, thus, leveling out the received signals and reducing the power consumption of the tag close to the gateway. If, e.g., the received signal strength from the close tag is ten times the detection minimum, the gateway may determine that half of the signal strength is still high enough to clearly detect the tag and send a setting to the close tag to half the sending power.

It is possible to set up a method with a handshake or acknowledge via time out possible. The gateway scans the first tag and sends a first new configuration. If no further packets from the gateway are received for a predetermined time period by the first tag, the first tag changes to default settings for the sending rate and/or the sending power and/or the packet size. If the first tag receives further packets, e.g., with the first new configuration or a second new configuration, the first tag restarts the predetermined time period.

In an embodiment, the derived setting for the sending rate of the first tag is determined in a way, that the higher the number of the detected tags, the higher the derived settings for the sending rate of the first tag. If a high number of tags are close to a gateway and all tags send their advertising packets arbitrarily in time, there will be collisions of packets, where it can get difficult for the gateway to detect all tags. If there is a long pause in between the advertising packets, it can take a lot of time to detect all tags. Therefore, it might be useful to reduce the sending rate of a tag, if there is a high number of tags, to reduce collisions and to increase the sending rate, in case of a lower number of tags and thus a lower number of collisions of advertising packets, to reduce the time till the gateway detects all tags.

In an embodiment, a predefined required timeliness defines a minimum level for the sending rate of the first tag. If there is a high turnover of assets, it might be necessary to set a lower limit for the sending rate of the tags, to ensure that information on the tags is available at the gateway.

The described method may be used for managing assets. The method may be implemented in an asset management system where the tags relate to assets.

The described method may use the described tags, the described assets and/or the described asset management system and the features of the method and the apparatuses and the system may be combined.

Further a computer program product is proposed, comprising instructions which, when the program is executed by the one or more first processors and/or by one or more second processors, cause the first and/or second processors to carry out the described method with the described tag, the described asset and/or the described asset management system.

The various embodiments of the method for controlling the sending of advertising packets of tags may be combined with the disclosed tags, assets, asset management system, and/or the disclosed computer program product.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows a movement of a tag into the range of a gateway of an asset management system;
- Fig. 2: shows a movement of the tag out of the range of a gateway;
- Fig. 3: shows a schematic representation of a tag;
- Fig. 4: shows a process flow for a method for controlling a sending of advertising packets of tags; and
- Fig. 5: shows an implementation of the method for controlling the sending of advertising packets of tags in a flow chart.

In the Figures, like reference numerals designate like or functionally equivalent elements, unless otherwise indicated.

### DETAILED DESCRIPTION OF ILLUSTRATIVE EMBODIMENTS

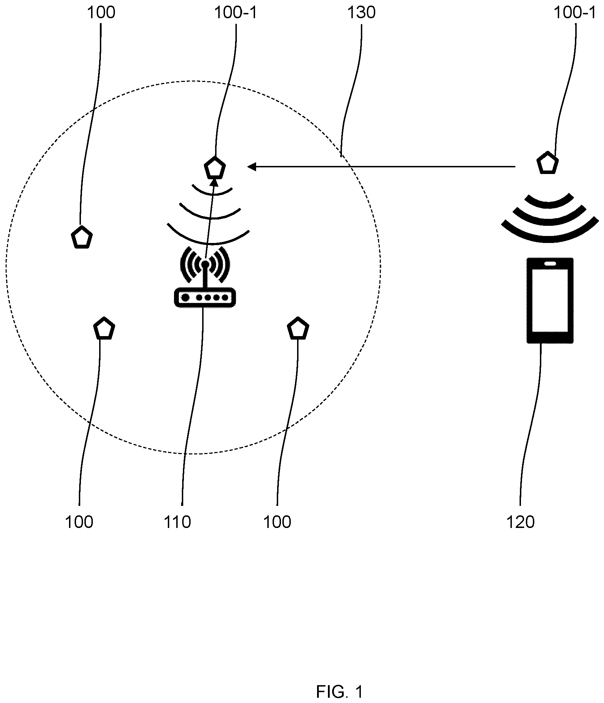

Fig. 1 shows a movement of a tag 100-1 into the range 130 of a gateway 110 of an asset management system.

Usually, a tag 100 sends advertising packets at its default settings with a high sending rate, also known as beaconing rate, with a high sending power, so that tags can easily be detected by gateways 110 or mobile phones 120, and with a default packet size, comprising the full information. The sending rate may be, e.g., once every 7 seconds. Since a gateway 110 is permanently scanning its environment, the beaconing rate could be reduced, in case the gateway 110 has received the advertising packets already and the tag is not moving. The tags 100 may be attached to assets, in particular, to power tools and their accessories. E.g., a tag 100 can be glued to a power tool.

Fig. 1 shows how the tag 100-1, together with its asset, is moved from outside the detection range 130 into the detection range 130 of the gateway 110. The detection range 130 is a range depending, amongst others, on the gateway 110 and its sensitivity, the environment, e.g., obstacles to radiofrequency, and the tags 100 and their sending power. However, at a certain distance a tag 100 will not be detected by the gateway 110 anymore. Not in the detection range 130, the tag 100-1 sends advertising packet with its default settings, which is useful for detecting the tag 100-1 by a mobile phone 120. When the tag 100-1 is detected by the gateway 110, the gateway 110 sends optimized settings for the sending power and/or the sending rate and/or the packet size of the tag 100-1.

The optimal beaconing rate may be calculated using the required timeliness of the asset management system data and the number of tags 100 seen by the gateway 110. E.g. the more tags 100 are in the vicinity of the gateway 110 the lower the sending rate and/or packet size for the tags 100 may be set in order to reduce collisions of the beacons

Additionally, the gateway 110 may also reduce the sending power of tags 100 by analyzing the strength of the signals received from each tag 100 and setting the sending power level of each tag 100 individually to a level, so that the signal is received by the gateway 110 at the same or a similar optimal signal level. This may significantly increase the battery lifetime of tags 100 close to the gateway 110, since they can send with reduced power and are still detected by the gateway 110. The tag 100-1 may apply the settings for the sending rate and/or the sending power only after it has determined that the tag 100-1 is not moved for a predetermined time, e.g. for at least 30 seconds.

The tag 100-1 may also determine a channel loss from the received signal strengths of packets received from the gateway 110, if the gateway 110 transmits its packets with a known power, e.g., a predetermined power or the gateway transmits in its packets the sending power of the packets, e.g., the packets used to communicate the sending rate and/or the packet size to the tag 100-1.

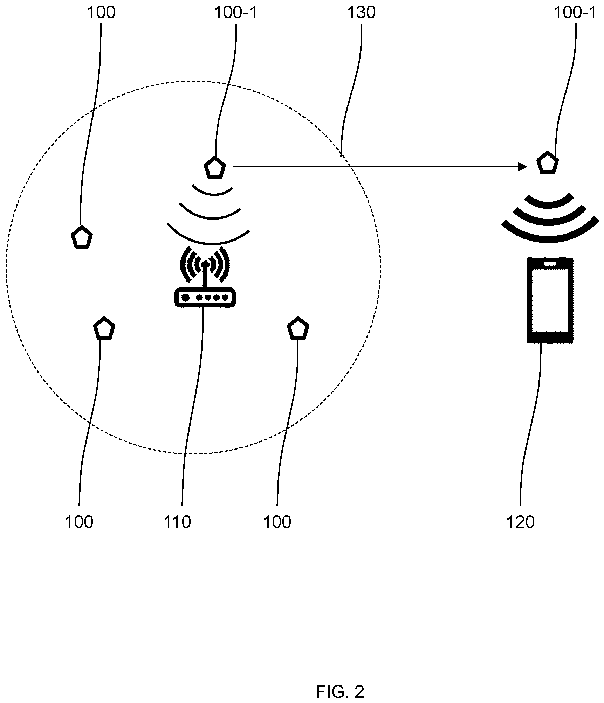

The adaptation of the sending rate and the sending power and/or packet size only applies as long as a tag 100 is in the range of the gateway 110 and not moving. If a tag 100 is moved, the sending rate and the sending power and packet size will be set to the default settings, as the tag 100 might be leaving the detection range 130 of the gateway 110. The settings are set to the default settings, thus that the tag 100 can be better found by a new gateway 110 or a scanning app of a mobile device 120, i.e., with high sending power and high beaconing rate. In Fig. 2 this situation is depicted. The asset with the tag 100-1 is moved and the tag 100-1 changes to its default settings, thus being easier detectable by the mobile phone 120.

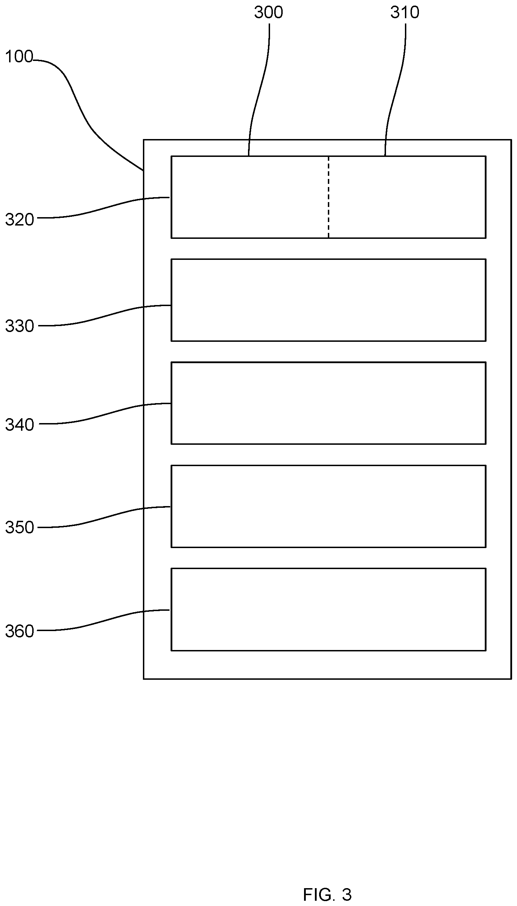

Fig. 3 shows a schematic representation of a tag 100. The tag 100 comprises a wireless communication sending unit 300, which is configured to send advertising packets with an adjustable sending power and an adjustable sending rate. The tag 100 also comprises a wireless communication receiving unit 310, which is configured to receive settings for the sending power and/or the sending rate and/or size of the advertising packets. The sending unit 300 and the receiving unit 310 are combined to a wireless communication sending and receiving unit 320, in which functions and/or technical implementations may be shared.

The tag 100 comprises a movement detection unit 330, configured to detect a movement of the tag 100. The movement detection unit 330 may comprise an acceleration sensor, a vibration sensor, a GPS sensor, an orientation sensor, a gyro sensor, and/or a magnetometer. The movement detection unit 330 is enabled by such a sensor to identify a movement of the tag 100, and its associated asset. There is no necessity to identify whether the tag 100 is moved outside of the detection range 130, it is sufficient to determine whether there is any movement.

The tag 100 comprises one or more processors 340. The processors 340 of the tag 100 are configured to instruct sending the advertising packets with the received settings for the sending power and/or the sending rate and/or packet size, if at least no movement of the tag 100 is detected, and sending the advertising packets with default settings, if at least the movement is detected. The processors may be realized in various ways, e.g., as ASICS. Additionally, a memory 350 may be included in the tags 100. The memory 350 may be used to store settings, such as the default settings, and/or to store detected movements with a time stamp, to determine the time since a movement.

The tag 100 comprises a battery 360, powering the sending and receiving unit 320, the sensors of the movement detection unit 330, the processors 340, and the memory 350. The battery 360 may be a non-exchangeable coin cell.

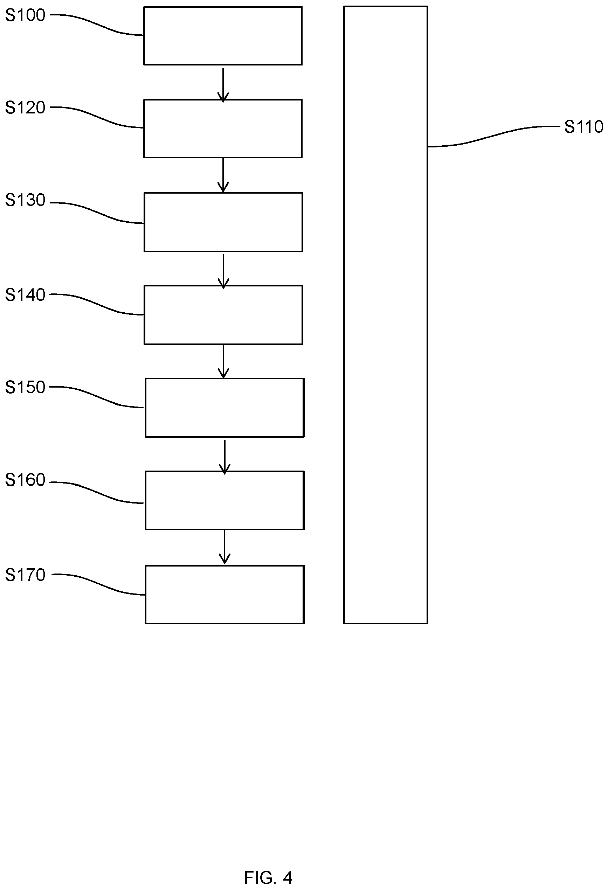

Fig. 4 shows a process flow for a method for controlling a sending of advertising packets of tags 100.

In step S100 advertising packets are sent at a default sending rate, a default sending power and a default packet size by a first tag 100. The advertising packets are sent by a wireless communication unit 300 of the first tag 100. In parallel, in step S110, a movement of the first tag 100 is monitored. This can be done by sensors of a movement detection unit 330 of the first tag 100. In step S120 a gateway 110 is scanning for advertising packets of tags 100. Having found tags 100 in the scanning S120, the gateway 110 derives in step S130 settings for the sending power and/or the sending rate and/or the packet size of the first tag 100, based on the total number of tags 100 found and/or a signal strength of the advertising packets of the first tag 100 received in the scanning S120. In step S140 the gateway 110 sends the settings for the sending power and/or the sending rate and/or the packet size to the first tag 100. The gateway 110 may broadcast the settings with information, e.g., an identifier, of the first tag 100, such that the first tag 100 can determine that the settings are intended for it. In step S150 the first tag 100 receives the settings for the sending power and/or the sending rate and/or the packet size. If in the parallel step S110 no movement of the first tag 100 is detected, the first tag 100 adjusts the sending power and/or the sending rate according to the received settings for the sending power and/or the sending rate and/or the packet size in step S160. If in the parallel step S110 a movement of the first tag 100 is detected, the first tag 100 adjusts the sending power and/or the sending rate and/or the packet size of the first tag 100 to its default settings in step S170.

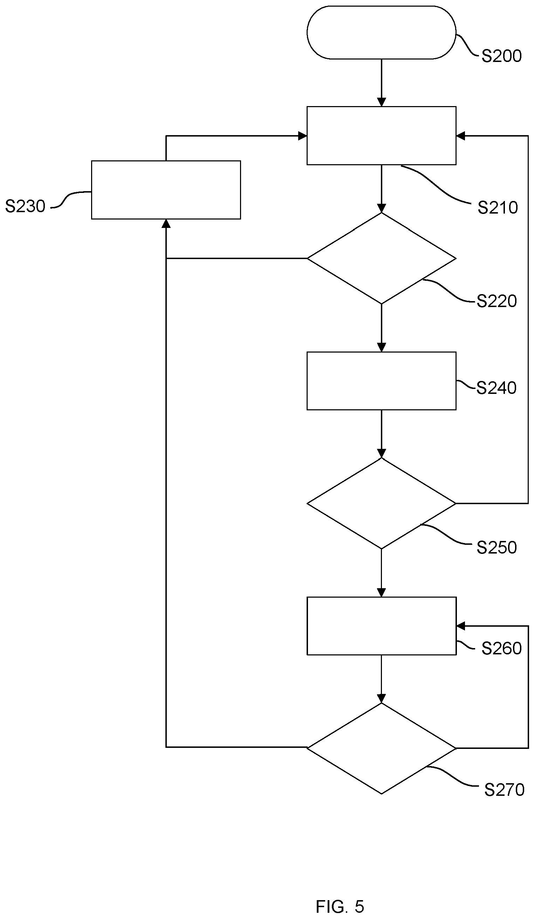

Fig. 5 shows in a flow chart, how the method for controlling the sending of advertising packets of tags may be implemented on a tag 100.

In step S200 the tag 100 is activated. The tag 100 sends in step S210 advertising packets at a default sending rate and with a default sending power and/or a default packet size. The default sending rate and sending power and/or the packet size are both comparatively high, e.g., the sending power may be more than 80 % of the maximum sending power and the sending rate may be more than one packet in 10 seconds. In step S220 there is a determination whether a movement happened within a predefined time, e.g., 30 seconds. If a movement happened, a movement flag is set in step S230 and the tag 100 continues with step S210, sending with default settings. As long as a movement happens within the predefined time, the tag 100 stays in this loop. If it is determined in S220 that no movement has happened, the movement flag is reset in step S240 and it is determined in step S250, whether the tag has received settings for the sending rate, and/or the sending power and/or the packet size from the gateway 110, particularly, within a predefined time period, e.g., within the last 3 minutes. If no settings have been received from the gateway 110, a loop goes back to step S100, and the tag 100 continues to send advertising packets with the default settings. If the tag 100 has received settings for the sending power and/or sending rate and/or the packet size, the tag 100 switches the sending rate and the sending power and/or the packet size according to the settings and sends in step S260 the advertising packets with the gateway settings. In step S270 it is again determined whether a movement happened. If no movement has happened a loop leads back to step S260 and the tag 100 continues to send advertising packets with the gateway settings. If a movement is detected, a loop leads back to step S230, and the movement flag is set for the tag 100.

### REFERENCE NUMERALS

- 100: tag
- 100-1: tag
- 110: gateway
- 120: mobile phone
- 130: detection range
- 300: wireless communication sending unit
- 310: wireless communication receiving unit
- 320: wireless communication sending and receiving unit
- 330: movement detection unit
- 340: processor
- 350: memory
- 360: battery

- S100: sending advertising packets
- S110: monitoring movement
- S120: scanning for advertising packets
- S130: deriving settings for sending power and/or the sending rate and/or the packet size
- S140: sending settings for sending power and/or the sending rate and/or the packet size
- S150: receiving settings for sending power and/or the sending rate and/or the packet size
- S160: adjusting settings for sending power and/or the sending rate and/or the packet size to received settings
- S170: adjusting settings for sending power and/or the sending rate and/or the packet size to default settings
- S200: activating of tag
- S210: sending of advertising packets at default settings
- S220: determination whether movement happened
- S230: setting of movement flag
- S240: resetting of movement flag
- S250: determining whether tag has received settings from gateway
- S260: sending advertising packets according to gateway settings
- S270: determination whether movement happened

## Claims

1. A tag (100) for an asset management system comprising:
- a wireless communication sending unit (300), configured to send advertising packets with an adjustable sending power and/or an adjustable sending rate and/or an adjustable packet size;
- a wireless communication receiving unit (310), configured to receive settings for the sending power and/or the sending rate and/or the packet size of the advertising packets;
- a movement detection unit (330), configured to detect a movement of the tag (100);
- one or more first processors (340) of the tag (100), configured to instruct sending the advertising packets with the received settings for the sending power and/or the sending rate and/or the packet size, if at least no movement of the tag (100) is detected, and sending the advertising packets with default settings, if at least the movement is detected.

2. The tag (100) according to claim 1, wherein the movement detection unit (330) comprises a first sensor, particularly an acceleration sensor, a vibration sensor, a GPS sensor, an orientation sensor, a gyro sensor, and/or a magnetometer.

3. The tag (100) according to any of the claims 1 or 2, wherein the wireless communication sending unit (300) comprises a radiofrequency sender, particularly a Bluetooth, Zigbee, Z-Wave, or LoRa sender, and/or the wireless communication receiving unit (310) comprises a radiofrequency receiver, particularly a Bluetooth, Zigbee, Z-Wave, or LoRa receiver.

4. The tag (100) according to any of the claims 1 to 3, further comprising a battery (360), particularly a coin cell, and/or a memory (350).

5. An asset, in particular a power tool or a battery pack for a power tool, more particular a saw, a driver, a wrench, a rotary hammer, a drill, or a screwdriver, with a tag (100) according to any of the claims 1 to 4, particularly, wherein the tag (100) is included in or attached to, particularly glued to, the asset.

6. An asset management system comprising:
- a plurality of tags (100) according to any of the claims 1 to 4 and/or assets according to claim 5;
- a gateway (110), configured to scan for advertising packets of the plurality of the tags (100) and to send settings for sending power and/or sending rate and/or packet size to the plurality of the tags (100);
- one or more second processors (340), configured to determine the settings based on the number of tags (100) seen by the gateway (110) and the signal strength at which the advertising packets are received by the gateway (110).

7. The asset management system according to claim 6, further comprising a mobile device, particularly, a mobile phone (120), a tablet, or a laptop, to scan for the advertising packets of the plurality of the tags (100).

8. A method for controlling sending of advertising packets of tags (100) comprising:
- sending (S100) advertising packets at a default sending rate and a default sending power and a default packet size by a first tag (100);
- monitoring (S110) a movement of the first tag (100);
- receiving (S150), by the first tag (100), settings for a sending power and/or a sending rate and/or a packet size
- adjusting (S170) the sending power and/or the sending rate and/or the packet size of the first tag (100) according to the received settings for the sending power and/or the sending rate and/or the packet size; and
- adjusting (S170) the sending power and/or the sending rate and/or the packet size of the first tag (100) to default settings if the movement of the first tag (100) is detected.

9. The method according to claim 8 further comprising:
- adjusting (S170) the sending power and/or the sending rate and/or the packet size of the first tag (100) to default settings if a predetermined change or a predetermined value of one or more second sensors of the first tag, particularly a temperature sensor or a runtime sensor, is detected; and/or
- adjusting (S170) the sending power and/or the sending rate and/or the packet size of the first tag (100) to default settings at a predetermined time and/or an expiring of a timer of the first tag (100); and/or
- adjusting (S170) the sending power and/or the sending rate and/or the packet size of the first tag (100) to default settings if the first tag (100) does not receive a reply to its advertising packets from the gateway (110) within a predetermined time period.

10. The method according to any of the claims 8 or 9 further comprising:
- scanning (S120) for advertising packets of one or more tags (100), particularly by a gateway (110);
- deriving (S130) settings for the sending power and/or the sending rate and/or the packet size of the first tag (100) based on a number of the one or more tags (100) detected and/or a signal strength of the advertising packets of the first tag (100) received in the scanning; and
- sending (S140) the settings for the sending power and/or the sending rate and/or the packet size to the first tag (100).

11. The method according to any of the claims 8 to 10, wherein the derived settings for the sending power of the first tag (100) changes, particularly reduces, the power of the advertising packets received from the first tag (100) from the default level to
- a power derived from the received power of the detected tags (100), particularly, derived from an average of the power of the detected tags (100), received in the scanning, or
- a predefined power.

12. The method according to any of the claims 8 to 11,
- wherein the derived setting for the sending rate of the first tag (100) is determined in a way, that the higher the number of the detected tags (100), the lower the derived setting for the sending rate of the first tag (100); and/or
- wherein the derived setting for the sending power of the first tag (100) is determined in a way, that the higher the number of the detected tags (100), the lower the derived setting for the sending power of the first tag (100); and/or
- wherein the derived setting for the packet size of the first tag (100) is determined in a way, that the higher the number of the detected tags (100), the lower the derived setting for the packet size of the first tag (100).

13. The method according to any of the claims 8 to 12, wherein a predefined required timeliness defines a minimum level for the sending rate of the first tag (100) and/or the method is used for managing assets.

14. The method according to any of the claims 8 to 13, using the tag (100) according to any of the claims 1 to 4, the asset according to claim 5 and/or the asset management system according to any of the claims 6 or 7.

15. A computer program product comprising instructions which, when the program is executed by the one or more first processors (340) and/or by one or more second processors (340), cause the first and/or second processors (340) to carry out the method according to any of the claims 8 to 14 with a tag (100) according to any of the claims 1 to 4, an asset according to claim 5 and/or an asset management system according to any the claims 6 or 7.
